# FASCICULE DE BREVET EUROPEEN

(11) **EP 1 249 676 B1**
(45) Date de publication et mention de la délivrance du brevet: **02.11.2005**
(21) Numéro de dépôt: 02290856.0
(22) Date de dépôt: 05.04.2002
(51) Int. Cl.: F25J 3/04, B01D 53/047, B01D 53/04

(54) **Procédé d'alimentation en azote impur de la chambre de combustion d'une turbine à gaz combinée à une unité de distillation d'air**
Verfahren zur Stickstoffzufuhr für eine Gasturbinenbrennkammer mit integrierter Luftzerlugungsanlage
Nitrogen gas supply process for a gas turbine combustor combined with an air distillation unit

(30) Priorité: 10.04.2001 FR 0104870
(43) Date de publication de la demande: 16.10.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Massimo, Giovanni, 1160 Bruxelles (BE); Peyron, Jean-Marc, 94000 Creteil (FR)
(74) Mandataire: Mercey, Fiona Susan

(56) Documents cités:
- EP-A- 1 043 557
- EP-A- 1 120 617
- EP-A- 1 143 216
- US-A- 4 806 136
- US-A- 6 080 226

## Description

La présente invention est relative à un procédé d'alimentation en azote impur de la chambre de combustion d'une turbine à gaz combinée à une unité de distillation d'air, l'unité de distillation d'air étant équipée d'un appareil d'épuration d'air en eau et en CO₂ par adsorption, cet appareil comprenant deux adsorbeurs dont chacun suit un cycle de fonctionnement qui comprend alternativement et cycliquement une phase d'adsorption à co-courant à une pression haute du cycle, et une phase de régénération, la phase de régénération comportant une étape (a) de décompression, une étape (c) de balayage à contre-courant par du gaz résiduaire de l'unité de distillation d'air issu d'une colonne basse pression de cette unité, et une étape (d) de recompression de l'adsorbeur jusqu'à la pression haute du cycle.

Les pressions dont il est question ici sont des pressions absolues.

Les turbines à gaz utilisées pour entraîner un alternateur de production d'électricité sont alimentées par un gaz issu d'une chambre de combustion. Cette chambre est alimentée essentiellement par de l'air comprimé par un compresseur d'air, qui est par exemple couplé à la turbine, et par un gaz combustible. La température de la flamme, et donc la génération de NOₓ, est réglée par injection supplémentaire d'azote dans la chambre de combustion.

Le gaz combustible est souvent produit par un gazéifieur alimenté d'une part par de l'oxygène, d'autre part par des produits carbonés, tel que du charbon. Une unité de distillation d'air produit alors l'oxygène consommé par le gazéifieur et l'azote envoyé à la chambre de combustion.

Le document US-A-4 806 136 décrit une installation de production d'énergie électrique, du type comprenant une turbine à gaz et une unité de distillation d'air, dans laquelle une conduite d'azote impur munie d'une vanne relie l'entrée d'air de chaque adsorbeur à température modulée, à la conduite d'alimentation du compresseur d'azote, dont le refoulement est relié à la chambre de combustion de la turbine à gaz.

Le gaz résiduaire de la colonne basse pression d'une unité de distillation d'air, par exemple une double colonne de distillation d'air, est de l'azote impur contenant typiquement 0,5 à 1% d'oxygène, et peut donc servir d'azote pour la chambre de combustion, la teneur maximale en oxygène admissible pour ce gaz étant typiquement de 2%. Dans certaines installations, où tous les produits de l'unité de distillation d'air sont valorisés sous pression et où le débit d'azote demandé par la turbine à gaz est important, il est avantageux de choisir une basse pression nettement supérieure à la pression atmosphérique (typiquement 3 à 4 bars, ce qui correspondant à une moyenne pression de distillation supérieure à 10 bars), et de balayer les adsorbeurs d'épuration sous cette basse pression. En effet, ceci permet de récupérer le gaz ayant servi au balayage et de le mélanger à l'azote impur envoyé directement de l'unité de distillation d'air à la turbine à gaz, sans effectuer de détente ou de recompression coûteuses en énergie.

Comme il est bien connu, le balayage de l'adsorbeur a pour effet de désorber les contaminants (essentiellement l'eau et le CO₂) qui ont été éliminés de l'air lors de la phase d'adsorption précédente.

Cependant, ce choix se heurte à une difficulté : à la fin de l'étape de décompression, l'adsorbeur contient encore beaucoup d'oxygène, de sorte que le gaz issu de l'adsorbeur en début de phase de balayage a une teneur en oxygène supérieure à la teneur maximale admissible pour l'alimentation de la chambre de combustion.

L'invention a pour but de résoudre cette difficulté, c'est-à-dire de permettre de façon simple et économique de recomprimer le gaz de balayage pour l'alimentation de la chambre de combustion de la turbine à gaz.

A cet effet, l'invention a pour objet un procédé du type précité, caractérisé en ce que :
- la colonne basse pression fonctionne à une basse pression nettement supérieure à la pression atmosphérique ;
- le gaz résiduaire est utilisé sensiblement à ladite basse pression pour l'étape de balayage (c);
- l'étape de décompression (a) est poursuivie jusqu'à une pression minimale du cycle nettement inférieure à ladite basse pression ;
- entre l'étape de décompression (a) et l'étape de balayage (c), on intercale une étape de repressurisation partielle dans laquelle on repressurise l'adsorbeur au moyen de gaz résiduaire jusqu'à sensiblement la pression de balayage; et
- le gaz résiduaire issu de l'adsorbeur pendant l'étape de balayage (c) est mélangé au gaz résiduaire produit par l'unité de distillation d'air, et le mélange est comprimé par un compresseur d'azote pour alimenter la chambre de combustion de la turbine à gaz.

Le procédé suivant l'invention peut comporter une ou plusieurs des caractéristiques suivantes :
- la pression minimale du cycle est sensiblement la pression atmosphérique ;
- après l'étape de repressurisation partielle (b), on effectue au moins une fois une étape supplémentaire (b') d'appauvrissement de l'adsorbeur en oxygène qui comporte les sous-étapes suivantes
- (b'1) décompression additionnelle de l'adsorbeur jusqu'à ladite pression minimale, et
- (b'2) repressurisation partielle additionnelle jusqu'à la pression de balayage ,
- puis on procède à l'étape de balayage (c) ;
- l'étape de balayage (c) comprend une sous-étape (c2) au cours de laquelle le gaz résiduaire est chauffé, suivie d'une sous-étape (c3) au cours de laquelle le gaz résiduaire n'est pas chauffé ;
- un gaz riche en azote, ayant au moins la teneur en azote dudit azote impur, ne provenant pas directement de la colonne basse pression, est utilisé pour réaliser la ou chaque étape de repressurisation partielle ;
- ledit gaz riche en azote provient d'un réseau de distribution d'azote ; et
- ledit gaz riche en azote provient d'une capacité auxiliaire alimentée par une partie du gaz refoulé par le compresseur d'azote.

Des exemples de mise en oeuvre de l'invention vont maintenant être décrits en regard des dessins annexés, sur lesquels :
- la Figure 1 représente très schématiquement une installation de production d'énergie électrique pour la mise en oeuvre d'un procédé conforme à l'invention ;
- la Figure 2 représente d'une manière plus détaillée une partie de cette installation ;
- la Figure 3 est un diagramme qui illustre le cycle de fonctionnement d'un adsorbeur ;
- la Figure 4 est une vue analogue à la Figure 1 d'une variante ; et
- la Figure 5 est une vue analogue à la Figure 3 correspondant à l'installation de la Figure 4.

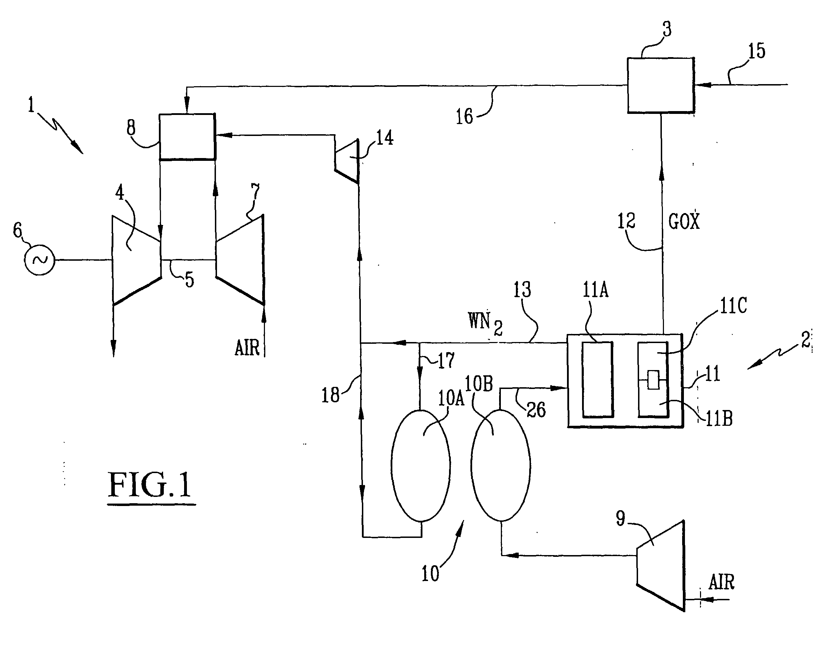

La Figure 1 représente très schématiquement une installation de production d'énergie électrique qui comprend une turbine à gaz 1 combinée à une unité de distillation d'air 2, ainsi qu'un gazéifieur 3.

La turbine à gaz comprend essentiellement une turbine 4 dont l'arbre 5 est couplé à un alternateur 6 et à un compresseur d'air 7, et une chambre de combustion 8.

L'unité de distillation d'air 2 comprend essentiellement un compresseur d'air 9, un appareil 10 d'épuration d'air en eau et en CO₂ par adsorption, cet appareil comprenant deux adsorbeurs 10A et 10B en parallèle, et une boîte froide 11 qui comprend essentiellement une ligne d'échange thermique 11A et une double colonne de distillation d'air constituée d'une colonne moyenne pression 11B et d'une colonne basse pression 11C.

Le mot « compresseur » peut signifier un compresseur unique ou plusieurs compresseurs en parallèle. De même, le mot « adsorbeur » peut se référer à une unique bouteille d'adsorption ou à plusieurs bouteilles en parallèle, et il peut y avoir plusieurs unités de distillation d'air 2 en parallèle, si la demande en oxygène du gazéifieur 3 est très importante, ce qui est généralement le cas.

En fonctionnement, l'air atmosphérique destiné à être distillé et comprimé en 9 à une moyenne pression de distillation supérieure à 10 bars, typiquement de 13 bars. L'air comprimé est épuré par l'un des deux adsorbeurs, l'adsorbeur 10B sur la Figure 1, puis est refroidi dans la ligne d'échange thermique 11A à contre-courant des produits de la distillation. Dans la double colonne, dont la colonne basse pression 11B fonctionne sous 3 à 4 bars, l'air est séparé en oxygène sous pression, qui est envoyé sous forme gazeuse, via une conduite 12, au gazéifieur 3, et en azote impur WN₂, qui sort de la boîte froide via une conduite 13. Cette conduite est reliée à l'aspiration d'un compresseur d'azote 14 dont le refoulement est relié à la chambre de combustion 8.

Le gazéifieur est en outre alimenté en produits carbonés via une conduite 15 et produit un gaz combustible sous pression, lequel est envoyé via une conduite 16 à la chambre de combustion 8. Cette dernière est encore alimentée par de l'air comprimé par le compresseur 7 de la turbine à gaz.

Une fraction de l'azote impur est prélevée dans la conduite 13 par un piquage 17 pour assurer la régénération de l'adsorbeur qui n'est pas en phase d'adsorption, à savoir l'adsorbeur 10A sur la Figure 1. Comme décrit ci-dessous plus en détail, l'azote impur ayant traversé cet adsorbeur est récupéré via une conduite 18 et réinjecté dans la conduite 13, le mélange parvenant ainsi au compresseur 14.

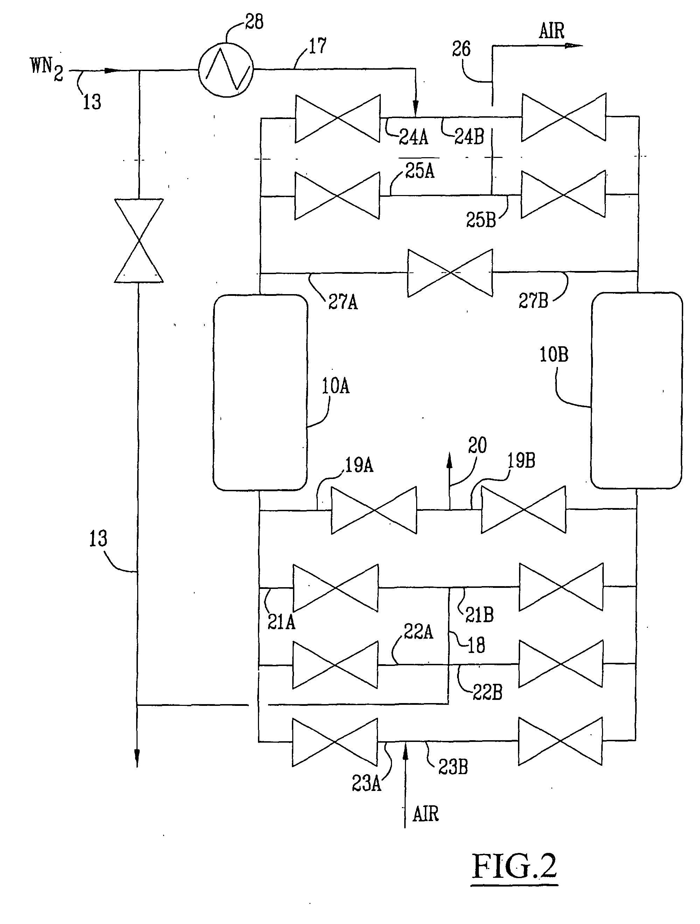

La Figure 2 représente plus en détail l'appareil d'épuration 10.

L'entrée de chaque adsorbeur est reliée à quatre conduites munies chacune d'une vanne : une conduite 19 de mise à l'atmosphère, reliée à une conduite d'évent 20 ; une conduite 21 de repressurisation partielle, reliée à la conduite 18 ; une conduite 22 d'évacuation de gaz de balayage, également reliée à la conduite 18 ; et une conduite 23 d'entrée d'air, reliée au refoulement du compresseur 9.

La sortie de chaque adsorbeur est reliée à trois conduites munies chacune d'une vanne : une conduite 24 d'alimentation en azote impur, reliée à la conduite 17 ; une conduite 25 de sortie d'air épuré, reliée à une conduite 26 qui mène à la boîte froide 11, et une conduite 27 de première repressurisation, reliée à la sortie de l'autre adsorbeur.

Comme indiqué sur la Figure 2, la conduite 17 est équipée d'un dispositif de chauffage 28.

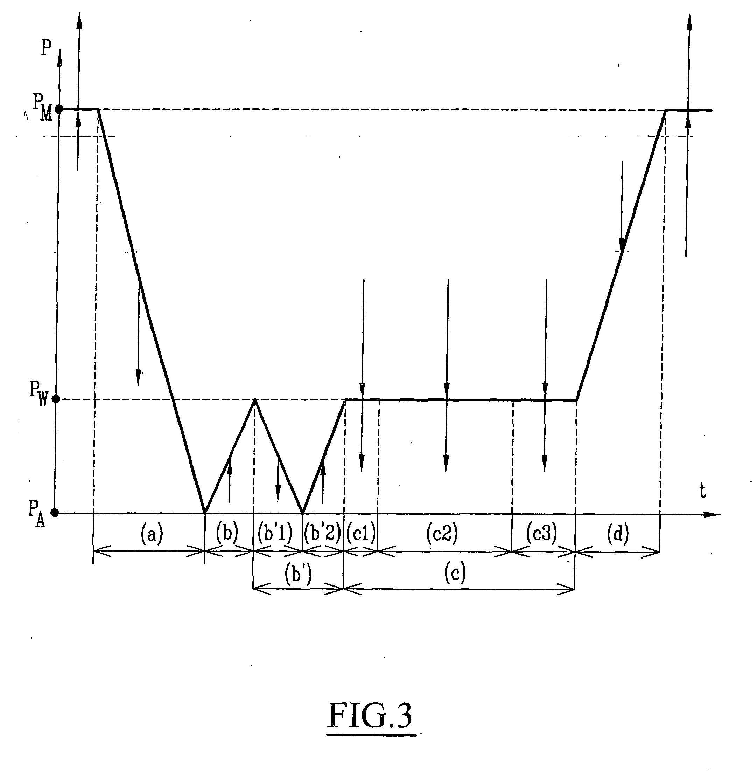

Le cycle de fonctionnement de chaque adsorbeur, décalé d'une demi-période par rapport à celui de l'autre adsorbeur, est représenté sur la Figure 3. Sur ce diagramme, où les temps t sont portés en abscisses et les pressions absolues P en ordonnées, les traits orientés par des flèches indiquent le sens de circulation dans l'adsorbeur : lorsqu'une flèche est dans le sens des ordonnées croissantes (vers le haut du diagramme), le courant est dit à co-courant, dans l'adsorbeur. Si la flèche dirigée vers le haut est située au-dessous du trait indiquant la pression dans l'adsorbeur, le courant pénètre dans l'adsorbeur par l'extrémité d'entrée de l'adsorbeur ; si la flèche, dirigée vers le haut, est située au-dessus du trait indiquant la pression, le courant sort de l'adsorbeur par l'extrémité de sorte que l'adsorbeur, les extrémités d'entrée et de sortie étant respectivement celles de l'air à traiter et de l'air épuré soutiré en phase d'adsorption ; lorsqu'une flèche est dans le sens des ordonnées décroissantes (vers le bas du diagramme), le courant est dit à contre-courant, dans l'adsorbeur. Si la flèche dirigée vers le bas est située au-dessous du trait indiquant la pression de l'adsorbeur, le courant sort de l'adsorbeur par l'extrémité d'entée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Le cycle de la Figure 3 comprend les étapes successives suivantes.

A la fin de la phase d'adsorption à la pression haute du cycle PH, qui est sensiblement la moyenne pression de distillation, l'adsorbeur subit les étapes suivantes :
(a) dépressurisation à contre-courant jusqu'à la pression atmosphérique PA par mise à l'atmosphère via la conduite 19 et l'évent 20;
(b) repressurisation partielle par de l'azote impur non chauffé (dispositif 28 inactif), à co-courant, via les conduites 18 et 21, jusqu'à la pression PW de ce gaz. Cette étape diminue la teneur en oxygène dans l'adsorbeur ;
(b') dépressurisation à contre-courant jusqu'à la pression atmosphérique PA par mise à l'atmosphère via les conduites 19 et 20 (b'1), puis nouvelle repressurisation partielle par de l'azote impur non chauffé, à co-courant, via les conduites 18 et 21, jusqu'à la pression PW (b'2). Ainsi, la teneur en oxygène de l'adsorbeur est de nouveau réduite, et passe sous la valeur maximale admissible dans la chambre de combustion 8 de la turbine à gaz ;
(c) balayage à contre-courant, via les conduites 17 et 24 pour l'admission, 22 et 18 pour le soutirage. Ce balayage s'effectue d'abord avec du gaz non chauffé (c1), puis avec du gaz chauffé en 28 (c2), puis de nouveau avec du gaz non chauffé (c3). Pendant toute cette étape, l'azote impur issu de l'adsorbeur est récupéré via les conduites 22 et 18 et réinjecté dans la conduite 13, où il se mélange avec l'azote impur véhiculé par cette conduite ;
(d) repressurisation à contre-courant par de l'air épuré en provenance de l'autre adsorbeur, via la conduite 27, jusqu'à la haute pression PH du cycle.

On remarque que ce cycle implique une consommation d'azote impur pour les repressurisations partielles (b) et (b'2), cet azote impur n'étant plus disponible pour alimenter le compresseur d'azote 14. Le débit d'azote impur correspondant est de l'ordre de 5% du débit d'air, ce qui réduit d'autant le débit disponible pour le compresseur d'azote.

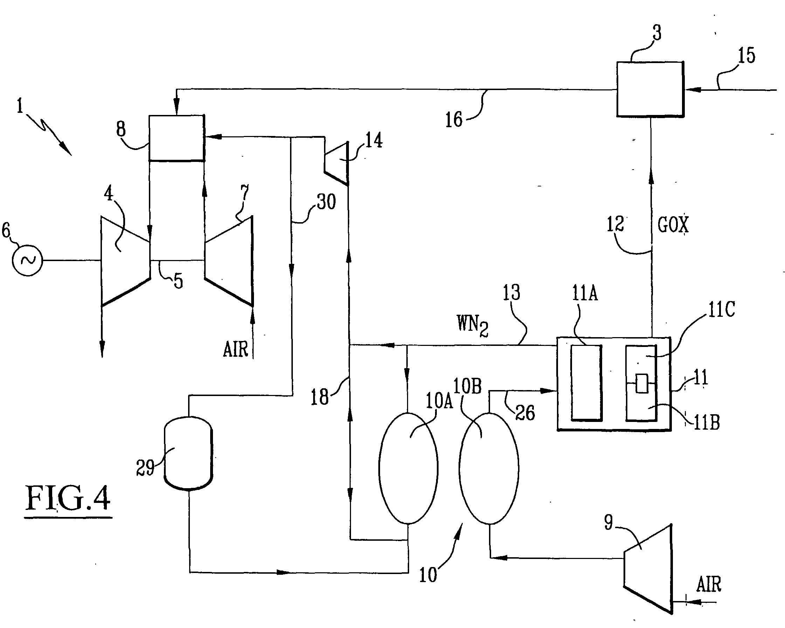

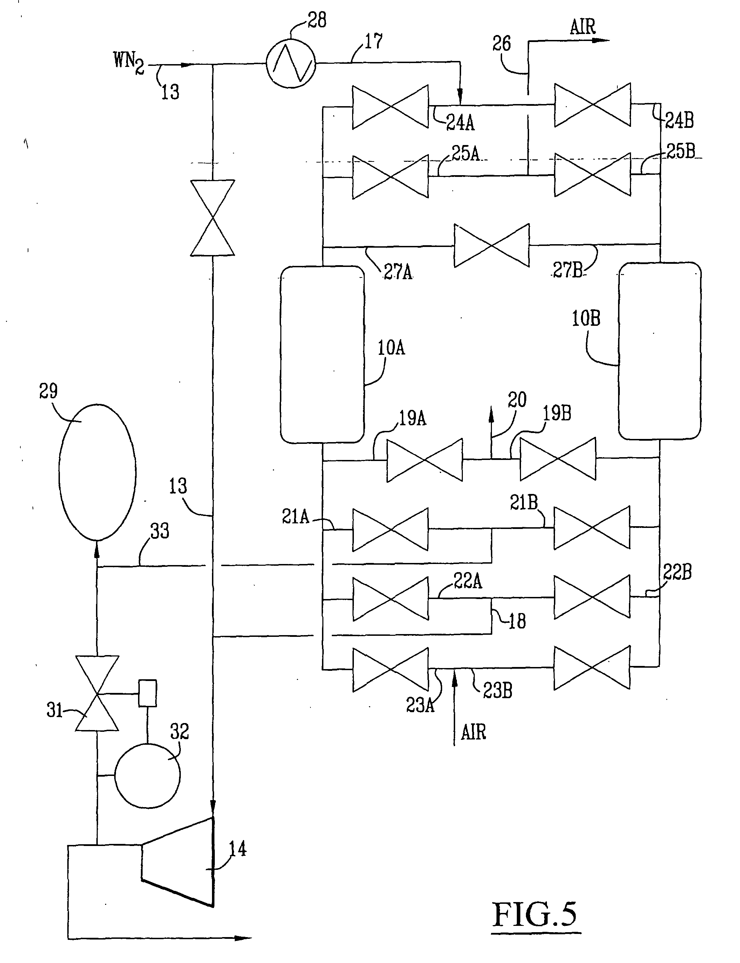

Pour diminuer cet inconvénient, on peut utiliser, pour effectuer les repressurisations partielles (b) et (b'2), de l'azote sous pression ne provenant pas directement de la boîte froide 11. Cet azote peut être fourni par un réseau de fourniture d'azote, ou bien par une capacité auxiliaire d'azote impur 29, représentée sur les Figures 4 et 5. Cette capacité est alimentée par un piquage 30 prévu au refoulement du compresseur 14 et équipée d'une vanne de détente 31 pilotée par un régulateur de débit 32 (Figure 5). Comme représenté sur la Figure 5, les conduites 21 ne sont plus reliées à la conduite 18, mais elles sont reliées à la capacité 29 via une conduite 33.

Grâce à la présence de la capacité 29, le débit d'azote impur nécessaire pour les étapes (b) et (b'2) est réparti sur toute la durée du cycle, ce qui permet d'augmenter le débit disponible pour le compresseur 14.

## Revendications

1. Procédé d'alimentation en azote impur de la chambre de combustion (8) d'une turbine à gaz (1) combinée à une unité de distillation d'air (2), l'unité de distillation d'air étant équipée d'un appareil (10) d'épuration d'air en eau et en CO₂ par adsorption, cet appareil comprenant deux adsorbeurs (10A, 10B) dont chacun suit un cycle de fonctionnement qui comprend alternativement et cycliquement une phase d'adsorption à co-courant à une pression haute (PH) du cycle, et une phase de régénération, la phase de régénération comportant une étape (a) de décompression, une étape (c) de balayage à contre-courant par du gaz résiduaire de l'unité de distillation d'air issu d'une colonne basse pression (11C) de cette unité, et une étape (d) de recompression de l'adsorbeur jusqu'à la pression haute du cycle,
**caractérisé en ce que** :
- la colonne basse pression (11C) fonctionne à une basse pression (PW) nettement supérieure à la pression atmosphérique (PA);
- le gaz résiduaire est utilisé sensiblement à ladite basse pression (PW) pour l'étape de balayage(c) ;
- l'étape de décompression (a) est poursuivie jusqu'à une pression minimale (PA) du cycle nettement inférieure à ladite basse pression (PW);
- entre l'étape de décompression (a) et l'étape de balayage (c), on intercale une étape (b) de repressurisation partielle dans laquelle on repressurise l'adsorbeur (10A, 10B) au moyen de gaz résiduaire jusqu'à sensiblement la pression de balayage (PW) ; et
- le gaz résiduaire issu de l'adsorbeur pendant l'étape de balayage (c) est mélangé au gaz résiduaire produit par l'unité de distillation d'air (2), et le mélange est comprimé par un compresseur d'azote (14) pour alimenter la chambre de combustion (8) de la turbine à gaz (1).

2. Procédé suivant la revendication 1, **caractérisé en ce que** la pression minimale du cycle (PA) est sensiblement la pression atmosphérique.

3. Procédé suivant la revendication 1 ou 2, **caractérisé en ce que**, après l'étape de repressurisation partielle (b), on effectue au moins une fois une étape supplémentaire (b') d'appauvrissement de l'adsorbeur (10A, 10B) en oxygène qui comporte les sous-étapes suivantes :
- (b'1) décompression additionnelle de l'adsorbeur jusqu'à ladite pression minimale (PA), et
- (b'2) repressurisation partielle additionnelle jusqu'à la pression de balayage (PW),
puis on procède à l'étape de balayage(c).

4. Procédé suivant l'une quelconque des revendications 1 à 3, **caractérisé en ce que** l'étape de balayage (c) comprend une sous-étape (c2) au cours de laquelle le gaz résiduaire est chauffé (en 28), suivie d'une sous-étape (c3) au cours de laquelle le gaz résiduaire n'est pas chauffé.

5. Procédé suivant l'une quelconque des revendications 1 à 4, **caractérisé en ce qu'**un gaz riche en azote, ayant au moins la teneur en azote dudit azote impur, ne provenant pas directement de la colonne basse pression (11C), est utilisé pour réaliser la ou chaque étape ((b) ; (b), (b'2)) de repressurisation partielle.

6. Procédé suivant la revendication 5, **caractérisé en ce que** ledit gaz riche en azote provient d'un réseau de distribution d'azote.

7. Procédé suivant la revendication 5, **caractérisé en ce que** ledit gaz riche en azote provient d'une capacité auxiliaire (29) alimentée par une partie du gaz refoulé par le compresseur d'azote (14).

## Patentansprüche

1. Verfahren zur Versorgung der Verbrennungskammer (8) einer Gasturbine (1), kombiniert mit einer Luftzerlegungsanlage (2), mit unreinem Stickstoff, wobei die Luftzerlegungsanlage mit einem Gerät (10) zur Reinigung der Luft von Wasser und CO₂ durch Adsorption versehen ist, wobei dieses Gerät zwei Adsorber (10A, 10B) umfasst, von denen jeder einem Funktionszyklus folgt, der alternativ und zyklisch eine Adsorptionsphase mit Mitstrom bei einem Hochdruck (PH) des Zyklus und eine Regenerationsphase umfasst, wobei die Regenerationsphase einen Schritt (a) der Druckminderung, einen Schritt (c) des Abtastens mit Gegenstrom durch Restgas aus der Luftzerlegungsanlage, das von einer Niederdrucksäule (11C) dieser Anlage stammt, und einen Schritt (d) des Nachpressens des Adsorbers bis zum Hochdruck des Zyklus umfasst,
**dadurch gekennzeichnet, dass**:
- die Niederdrucksäule (11C) mit einem Niederdruck (PW) funktioniert, der deutlich höher als der Luftdruck (PA) ist;
- das Restgas im Wesentlichen bei Niederdruck (PW) für den Schritt des Abtastens (C) verwendet wird;
- der Schritt (a) der Druckminderung bis zu einem Mindestdruck (PA) des Zyklus fortgeführt wird, der deutlich geringer als der Niederdruck (PW) ist;
- zwischen dem Schritt (a) der Druckminderung und dem Schritt (c) des Abtastens ein Schritt (b) der teilweisen Druckerhöhung eingeschoben ist, in dem der Druck im Adsorber (10A, 10B) mit Hilfe von Restgas bis im Wesentlichen zum Abtastdruck (PW) wieder erhöht wird; und
- das aus dem Adsorber während des Schrittes (c) des Abtastens kommende Restgas mit dem Restgas gemischt wird, das von der Luftzerlegungsanlage (2) erzeugt wird, und die Mischung durch einen Stickstoffkompressor (14) komprimiert wird, um die Verbrennungskammer (8) der Gasturbine (1) zu speisen.

2. Verfahren nach Anspruch 1, **dadurch gekennzeichnet, dass** der Mindestdruck des Zyklus (PA) im Wesentlichen der Luftdruck ist.

3. Verfahren nach Anspruch 1 oder 2, **dadurch gekennzeichnet, dass** nach dem Schritt der teilweisen Druckerhöhung (b) mindestens einmal ein zusätzlicher Schritt (b') der Abreicherung des Adsorbers (10A, 10B) an Sauerstoff erfolgt, der die folgenden Unterschritte umfasst:
- (b'1) zusätzliche Druckminderung des Adsorbers bis zum Mindestdruck (PA), und
- (b'2) zusätzliche teilweise Druckerhöhung bis zum Abtastdruck (PW),
wobei dann der Schritt des Abtastens (c) durchgeführt wird.

4. Verfahren nach einem der Ansprüche 1 bis 3, **dadurch gekennzeichnet, dass** der Schritt des Abtastens (c) einen Unterschritt (c2) umfasst, während dessen das Restgas erhitzt wird (bei 28), gefolgt von einem Unterschritt (c3), während dessen das Restgas nicht erhitzt wird.

5. Verfahren nach einem der Ansprüche 1 bis 4, **dadurch gekennzeichnet, dass** ein an Stickstoff reiches Gas, das mindestens den Stickstoffgehalt des unreinen Stickstoffes aufweist und nicht direkt von der Niederdrucksäule (11C) kommt, verwendet wird, um den oder jeden Schritt ((b); (b'2)) der teilweisen Druckerhöhung durchzuführen.

6. Verfahren nach Anspruch 5, **dadurch gekennzeichnet, dass** das an Stickstoff reiche Gas von einem Stickstoffverteilungsnetz kommt.

7. Verfahren nach Anspruch 5, **dadurch gekennzeichnet, dass** das an Stickstoff reiche Gas von einer Hilfskapazität (29) kommt, die mit einem Teil des vom Stickstoffkompressor (14) geförderten Gases gespeist wird.

## Claims

1. Method of feeding, with impure nitrogen, the combustion chamber (8) of a gas turbine (1) combined with an air distillation unit (2), the air distillation unit being equipped with an apparatus (10) for purifying air of water and of CO₂ by adsorption, this apparatus comprising two adsorbers (10A, 10B), each one of which follows an operating cycle which comprises, alternately and cyclically, a co-current adsorption phase at a high pressure (HP) of the cycle, and a regeneration phase, the regeneration phase comprising a decompression step (a), a step (c) of counter-current purging by waste gas from the air distillation unit coming from a low-pressure column (11C) of this unit, and a step (d) of recompressing the adsorber up to the high pressure of the cycle,
**characterized in that**:
- the low-pressure column (11C) operates at a low pressure (LP) which is clearly greater than atmospheric pressure (AP);
- the waste gas is used almost at the said low pressure (LP) for the purging step (c);
- the decompression step (a) is continued down to a minimum pressure (AP) of the cycle which is clearly less than the said low pressure (LP);
- between the decompression step (a) and the purging step (c), a partial repressurization step (b) is inserted, in which the adsorber (10A, 10B) is repressurized by means of waste gas up to almost the purging pressure (LP); and
- the waste gas coming from the adsorber during the purging step (c) is mixed with the waste gas produced by the air distillation unit (2), and the mixture is compressed by a nitrogen compressor (14) in order to feed the combustion chamber (8) of the gas turbine (1).

2. Method according to Claim 1, **characterized in that** the minimum pressure of the cycle (AP) is almost atmospheric pressure.

3. Method according to Claim 1 or 2, **characterized in that**, after the partial repressurization step (b), an additional step (b') of depleting the adsorber (10A, 10B) of oxygen is carried out at least once, which step comprises the following substeps:
- (b'1) additional decompression of the adsorber down to the said minimum pressure (AP), and
- (b'2) additional partial repressurization up to the purging pressure (LP),
then the purging step (c) is carried out.

4. Method according to any one of Claims 1 to 3, **characterized in that** the purging step (c) comprises a substep (c2) during which the waste gas is heated (at 28) followed by a substep (c3) during which the waste gas is not heated.

5. Method according to any one of Claims 1 to 4, **characterized in that** a nitrogen-rich gas, having at least the nitrogen content of the said impure nitrogen, not coming directly from the low-pressure column (11C), is used in order to carry out the or each partial repressurization step ((b); (b'2)).

6. Method according to Claim 5, **characterized in that** the said nitrogen-rich gas comes from a nitrogen distribution network.

7. Method according to Claim 5, **characterized in that** the said nitrogen-rich gas comes from an auxiliary tank (29) fed by part of the gas delivered by the nitrogen compressor (14).
